# EUROPEAN PATENT SPECIFICATION

(11) **EP 4 365 210 B1**
(45) Date of publication and mention of the grant of the patent: **08.04.2026**
(21) Application number: 22841984.2
(22) Date of filing: 01.07.2022
(51) Int. Cl.: C08F 2/18, C08F 2/00, C08F 14/26, C08F 214/26

(54) **METHOD FOR PRODUCING FLUORINE-CONTAINING POLYMER**
VERFAHREN ZUR HERSTELLUNG EINES FLUORHALTIGEN POLYMERS
PROCÉDÉ POUR LA PRODUCTION DE POLYMÈRE CONTENANT DU FLUOR

(30) Priority: 13.07.2021 JP 2021115703
(43) Date of publication of application: 08.05.2024
(73) Proprietor: DAIKIN INDUSTRIES, LTD., Osaka-shi, Osaka 530-0001 (JP)
(72) Inventor: TAKAOKA, Hiroshi, Osaka-shi, Osaka 530-8323 (JP); MARUYA, Yoshiki, Osaka-shi, Osaka 530-8323 (JP); SUZUKI, Takaaki, Osaka-shi, Osaka 530-8323 (JP); NAKAO, Yuki, Osaka-shi, Osaka 530-8323 (JP)
(74) Representative: Hoffmann Eitle
(86) International application number: PCT/JP2022/026475
(87) International publication number: WO 2023/286640

(56) References cited:
- WO-A1-2008/047906
- WO-A1-2008/047906
- WO-A1-2009/014138
- WO-A1-2009/014138
- JP-A- H04 261 403
- JP-A- H06 211 933
- JP-A- H06 340 719
- JP-A- S4 811 386
- US-A- 4 038 473
- US-A1- 2010 314 153

## Description

### Technical Field

The present disclosure relates to a method for producing a fluorine-containing polymer.

### Background Art

A fluorine-containing polymer is produced by polymerizing a fluorine-containing monomer (optionally together with a fluorine-free monomer). Examples of a polymerization method for producing a fluorine-containing polymer include emulsion polymerization, suspension polymerization, solution polymerization, bulk polymerization and the like. Suspension polymerization has a problem of adhesion of a generated polymer to the inner surface of a polymerization tank (in more detail, the inner wall surfaces and the surfaces of a stirring blade, a baffle and the like in the case of being provided).

### Citation List

### Patent Literature

Patent Literature 1
   International Publication No. WO 2009/014138
Patent Literature 2
   JP 48-11386A
Patent Literature 3
   JP 4-261403A

### Summary of Invention

### Technical Problem

In the case of using a polymerization tank having the inner wall surfaces on which glass lining has been performed as described in the background art of Patent Literature 1, it is difficult to increase the size of the polymerization tank and, furthermore, there is a limitation on polymerization pressures, which limits improvement in the production efficiency of fluorine-containing polymers such as a slow polymerization rate (refer to the background art of Patent Literature 1). In addition, performing glass lining even on all of the stirring blade, the baffle and the like creates a difficulty of an increase in the production cost or the like. In addition, in the case of using a suspension stabilizer as described in Patent Literature 1, the above-described problems are solved, but such a treatment as described in Patent Literature 1 becomes necessary, and there is a room for improvement in the production cost.

In the aqueous suspension polymerization of tetrafluoroethylene or the polymerization of a vinyl-based monomer such as styrene, it is known that a treatment of the inner surface of a polymerization tank with an aqueous solution of phosphoric acid and/or a phosphate makes it possible to prevent the adhesion of a generated polymer to the polymerization tank (refer to Patent Literature 2 and 3). In more detail, for example, Patent Literature 2 describes that such a treatment is performed by filling a polymerization tank with an aqueous solution of phosphoric acid or a phosphate, leaving the polymerization tank to stand for approximately one hour, next, draining the aqueous solution and then cleaning the polymerization tank with pure water until phosphoric acid ions are not detected or by spraying an aqueous solution of phosphoric acid or a phosphate to the wall of the polymerization tank or the like with a jet injector for approximately 10 minutes and then cleaning the wall or the like with pure water until phosphoric acid ions are not detected.

An objective of the present disclosure is to provide a new method for producing a fluorine-containing polymer capable of simply and effectively preventing the adhesion of the fluorine-containing polymer to a polymerization tank.

### Solution to Problem

[1] A method for producing a fluorine-containing polymer comprising:
   (a) treating, on a inner surface made of metal of a polymerization tank, at least a region with which a reaction mixture may come into contact during the following (b) with a treatment agent containing phosphoric acid and/or a phosphate and a polar solvent to form an adhesion prevention film on the region, and
   (b) polymerizing at least a fluorine-containing monomer in a reaction mixture containing a fluorine-containing solvent and water by suspension polymerization in the polymerization tank to obtain the fluorine-containing polymer,
   wherein in step (a) the temperature during the contact between the region and the treatment agent is ≤ 100ºC and the adhesion prevention film contains 3-10 atom % P.
[2] The method for producing a fluorine-containing polymer according to [1], wherein a concentration of the phosphoric acid and/or phosphate in the treatment agent is 0.1 mass% or higher and 15 mass% or lower.
[3] The method for producing a fluorine-containing polymer according to any one of [1] to [2], wherein the treatment agent is an aqueous solution of a metal pyrophosphate.
[4] The method for producing a fluorine-containing polymer according to [3], wherein the treatment agent is an aqueous solution of sodium pyrophosphate.
[5] The method for producing a fluorine-containing polymer according to [4], wherein a Na content of the adhesion prevention film is 1 atom% or more and 20 atom% or less.
[6] The method for producing a fluorine-containing polymer according to any one of [1] to [5], wherein a metal that forms the inner surface of the polymerization tank is at least one selected from the group consisting of stainless steel, nickel alloy steel and carbon steel.
[7] The method for producing a fluorine-containing polymer according to any one of [1] to [6], further comprising, after the (b):
   (c) draining substantially all of the reaction mixture containing the fluorine-containing polymer from the polymerization tank, and then repeating the (a) and the (b).
[8] The method for producing a fluorine-containing polymer according to [7], wherein, in the (c), the reaction mixture contains the fluorine-containing polymer and the water and is substantially free from the fluorine-containing solvent.

### Advantageous Effect of Invention

According to the present disclosure, a new method for producing a fluorine-containing polymer capable of simply and effectively preventing the adhesion of the fluorine-containing polymer to a polymerization tank is provided.

### Description of Embodiment

The present inventors' studies clarified that, in the case of producing a fluorine-containing polymer by polymerizing at least a fluorine-containing monomer in a reaction mixture containing a fluorine-containing solvent and water by suspension polymerization, adhesion of the fluorine-containing polymer cannot be prevented even by performing the above-described well-known convention treatment on the metal inner surface of a polymerization tank.

The present inventors analyzed and evaluated films formed of a treatment agent containing phosphoric acid and/or a phosphate (adhesion prevention films), repeated additional intensive studies and came to complete the present disclosure. Hereinafter, a method for producing a fluorine-containing polymer in one embodiment of the present disclosure will be described in detail.

In the present embodiment, a method for producing a fluorine-containing polymer comprises
(a) treating, on a metal inner surface of a polymerization tank, a predetermined region with a treatment agent containing phosphoric acid and/or a phosphate and a polar solvent to form an adhesion prevention film (also simply referred to as "film" in the present specification) on the region, and
(b) polymerizing at least a fluorine-containing monomer in a reaction mixture by suspension polymerization in the polymerization tank to obtain the fluorine-containing polymer, wherein in step (a) the temperature during the contact between the region and the treatment agent is ≤ 100ºC and the adhesion prevention film contains 3-10 atom % P.

Hereinafter, each step will be described in more detail.

### · Step (a)

First, before the polymerization of the step (b), the inner surface of a polymerization tank is treated with a treatment agent.

The polymerization tank is not limited as long as the polymerization tank has a metal inner surface. In more detail, in the polymerization tank, at least the inner wall surfaces (including the inner surfaces of the side walls, the inner surface of the bottom portion and the inner surface of the top board (lid)) may be made of a metal. The polymerization tank optionally include a stirring blade, a baffle (baffle board) and/or the like, and these surfaces may be made of a metal.

The polymerization tank having a metal inner surface has high pressure resistance compared with the case of such an inner wall surface described in the background art of Patent Literature 1 on which glass lining has been performed. The metal that forms the inner surface of the polymerization tank may be one or more arbitrary metals and may be, for example, at least one selected from the group consisting of stainless steel, nickel alloy steel and carbon steel.

In more detail, a predetermined region on the metal inner surface of such a polymerization tank is treated with a treatment agent. The predetermined region needs to include at least a region with which a reaction mixture may come into contact during the step (b) and, preferably, may be substantially all of the metal inner surface.

The treatment agent is a liquid-phase substance containing phosphoric acid and/or a phosphate and a polar solvent.

The phosphoric acid and/or phosphate may be at least one selected from the group consisting of phosphoric acids such as orthophosphoric acid, metaphosphoric acid and pyrophosphoric acid and salts of such a phosphoric acid and a metal (for example, sodium, potassium, magnesium, calcium, zinc, manganese or the like). The phosphoric acid and/or phosphate may be, for example, a metal pyrophosphate and, typically, may be sodium pyrophosphate.

The polar solvent needs to be a solvent capable of dissolving phosphoric acid and/or phosphates and, normally, may be an aqueous solvent. The aqueous solvent may be composed of water and an optional liquid-phase substance that is compatible with water (for example, an alcohol) and is preferably water.

The treatment agent may be an aqueous solution containing phosphoric acid and/or a phosphate dissolved in an aqueous solvent. The treatment agent may be, for example, an aqueous solution of metal pyrophosphate and, typically, may be an aqueous solution of sodium pyrophosphate.

The concentration of the phosphoric acid and/or phosphate in the treatment agent may be selected depending on specific treatment conditions and/or production conditions of a fluorine-containing polymer. The concentration of the phosphoric acid and/or phosphate in the treatment agent may be, for example, 0.1 mass% or higher and 15 mass% or lower and, preferably, may be 1 mass% or higher and/or 10 mass% or lower.

The treatment agent may contain, aside from the phosphoric acid and/or phosphate and the polar solvent, an arbitrary appropriate different component at a relatively low concentration.

A treatment method for treating the inner surface of the polymerization tank with the treatment agent may be to bring the treatment agent into contact with the inner surface of the polymerization tank (in more detail, the above-described predetermined region) for a predetermined contact time. The contact time may be, for example, three hours or longer in the initial case and, preferably, may be 10 hours or longer. When the treatment agent is brought into contact for a relatively long time as described above, it is possible to form a strong film that is excellent in terms of preventing the adhesion of the fluorine-containing polymer as described below. The temperature during the contact is 100°C or lower.

The treatment method may be, for example, to fill the polymerization tank with the treatment agent, maintain the polymerization tank for the predetermined contact time, then, drain and recover the remainder of the treatment agent (a portion excluding the treatment agent used for the formation of the film) or to spray the treatment agent to the inner surface of the polymerization tank with a jet injector for the predetermined contact time and drain and recover the remainder of the treatment agent (a portion excluding the treatment agent used for the formation of the film) during/after the spraying.

The treatment method preferably includes cleaning the inner surface of the polymerization tank with pure water (until phosphoric acid ions are not detected) after the remainder of the treatment agent is drained from the polymerization tank.

The treatment method may include heating after the contact with the treatment agent and/or the cleaning.

As described above, it is possible to treat all of the predetermined region on the metal inner surface of the polymerization tank by an extremely simple operation.

As a result of the above-described treatment, a film is formed on the predetermined region. This film is derived from the treatment agent and contains phosphorus (P). The P content of the film is 3 atom% (for example, 3.0 atom%) or more and 10 atom% or less and, preferably, may be 3 atom% (for example, 3.0 atom%) or more and/or 7 atom% (for example. 7.0 atom%) or less. The present inventors' studies clarified that a film exhibiting the above-described P content is strong and excellent in terms of preventing the adhesion of the fluorine-containing polymer as described below.

While not limiting the present embodiment, in a case where the treatment agent is an aqueous solution of sodium pyrophosphate, the Na content of the film may be 1 atom% (for example, 1.0 atom%) or more and 20 atom% or less and, preferably, may be 5 atom% (for example, 5.0 atom%) or more and/or 18 atom% or less.

The content of an element (the above-described P, Na or the like) in the film is measured by X-ray photoelectron spectroscopy (XPS).

### · Step (b)

Next, in the polymerization tank treated (to form the film) as described above, at least a fluorine-containing monomer is polymerized in a reaction mixture by suspension polymerization to obtain the fluorine-containing polymer.

The reaction mixture contains a fluorine-containing solvent and water. The fluorine-containing solvent needs to be a liquid-phase substance capable of dissolving the fluorine-containing monomer. The fluorine-containing solvent may be the fluorine-containing monomer itself. The fluorine-containing solvent functions as a reaction field of the polymerization. While not limited to the present embodiment, a polymerization reaction proceeds in a state where the fluorine-containing solvent containing the fluorine-containing monomer dissolved therein (or being the fluorine-containing monomer itself) has been suspended in water or vice versa. The reaction mixture comes to contain a generated fluorine-containing polymer.

The fluorine-containing monomer is a monomer having a fluorine atom. In addition to the fluorine-containing monomer, a fluorine-free monomer is optionally polymerized (copolymerized) together. The fluorine-free monomer is a monomer having no fluorine atoms. The fluorine-containing monomer and the optional fluorine-free monomer are selected depending on a fluorine-containing polymer to be produced.

The fluorine-containing polymer may have a melting point of, for example, 150°C or higher and 340°C or lower. The fluorine-containing polymer may be a resin from a different viewpoint.

More specifically, the fluorine-containing polymer is preferably a polymer composed of at least one monomer selected from tetrafluoroethylene, hexafluoropropylene, vinylidene fluoride, chlorotrifluoroethylene, ethylene, perfluoroalkyl vinyl ether, perfluoro(1,1,5-trihydro-1-pentene) and perfluorobutylethylene (here, a polymer composed of ethylene alone is not a fluorine-containing polymer and thus excluded), more preferably a melt-processable fluorine-containing polymer, and still more preferably a tetrafluoroethylene/hexafluoropropylene copolymer [FEP], a tetrafluoroethylene/hexafluoropropylene/perfluoroalkyl vinyl ether copolymer [FEP], a tetrafluoroethylene/perfluoroalkyl vinyl ether copolymer [PEA], poly(chlorotrifluoroethylene) [PCTFE], a tetrafluoroethylene/chlorotrifluoroethylene/perfluoroalkyl vinyl ether copolymer [CPT], a tetrafluoroethylene/ethylene/perfluoro(1,1,5-trihydro-1-pentene) copolymer [ETFE], a tetrafluoroethylene/ethylene/perfluorobutylethylene polymer [ETFE], a tetrafluoroethylene/ethylene/hexafluoropropylene/perfluoro( 1,1,5-trihydro-1-pentene) copolymer [EFEP], a tetrafluoroethylene/ethylene/hexafluoropropylene/perfluorob utylethylene copolymer [EFEP], an ethylene/chlorotrifluoroethylene copolymer [ECTFE], poly(vinylidene fluoride) [PVdF], a tetrafluoroethylene/vinylidene fluoride copolymer [VT], a tetrafluoroethylene/hexafluoropropylene/vinylidene fluoride copolymer [THV] or the like. Among these, a perhalopolymer, FEP, PFA, PCTFE and CPT, which do not include any C-H bonds and have high resistance to oxidation treatments, are particularly preferable. However, the fluorine-containing polymer is not limited to melt-processable fluorine-containing polymers and may be, for example, polytetrafluoroethylene (PTFE).

The reaction mixture may further contain a polymerization initiator. As the polymerization initiator that is used for the suspension polymerization, it is possible to appropriately use a variety of oil-soluble organic peroxides, water-soluble persulfates or the like that are ordinarily used for radical polymerization, and, in particular, it is possible to preferably use organic peroxides such as peroxycarbonates and peroxy esters, that is, di(chlorofluoroacyl) peroxide, di(fluoroacyl) peroxide, di (ω-hydrododecafluoroheptanoyl) peroxide, di-n-propyl peroxydicarbonate, di-i-propyl peroxydicarbonate, t-butyl peroxyisopropyl carbonate, bis(4-t-butylcyclohexyl) peroxydicarbonate, di-2-ethylhexyl peroxydicarbonate, di- i-butyryl peroxide and the like. Among these, di-i-propyl peroxydicarbonate and di-n-propyl peroxydicarbonate, which are hydrocarbon-based organic peroxides, are preferable from the viewpoint of the decomposition rate (half-life), the frequency factor, the cost or the like.

The reaction mixture may or may not contain a suspension stabilizer. In the case of using no suspension stabilizers, the purity of a fluorine-containing polymer to be obtained in the end becomes higher. In the case of using a suspension stabilizer, it is possible to further reduce a variation in the shape and/or dimension of the particles of a fluorine-containing polymer to be generated.

Suspension stabilizers are roughly classified into two categories of inorganic colloidal stabilizers and stabilizers composed of a hydrocarbon-based polymer, and the stabilizers composed of a hydrocarbon-based polymer are preferable since the stabilizers may be efficiently removed from a system by oxidation and do not allow any metals to remain in the obtained fluorine-containing polymer. The suspension stabilizer may be used after being dissolved in polywater before the initiation of polymerization. Examples of the above-described hydrocarbon-based polymer include polyvinyl alcohol, methyl cellulose, hydroxypropyl cellulose, polyvinylpyrrolidone, polyaspartic acid and the like, and, among these, polyvinyl alcohol or methyl cellulose is preferable from the viewpoint of safety, low cost and performance.

The polymerization conditions of the suspension polymerization may be set as appropriate depending on the kind, physical properties and the like of the intended fluorine-containing polymer. Particularly, the polymerization pressure may be set to a higher pressure than that for conventional suspension polymerization, and the suspension polymerization can be performed with no problems even at, for example, a pressure exceeding 2.0 MPa gauge pressure (hereinafter, indicated by MPaG), which is mentioned as the substantial upper limit pressure of such a polymerization tank on which glass lining has been performed as described in the background art of Patent Literature 1. Application of a higher polymerization pressure makes it possible to shorten the reaction time.

The suspension polymerization may be performed in an arbitrary form such as a continuous manner, a batch manner, a semi-batch manner. In the case of the semi-batch manner, the fluorine-containing monomer and the optional fluorine-free monomer are added as appropriate in the middle of the polymerization operation, and, additionally, the polymerization initiator or the like may be added as appropriate.

The fluorine-containing polymer that is obtained as described above may have a particulate form. The average particle size of the fluorine-containing polymer may be 10 µm or more and 2,000 µm or less.

According to the present embodiment, since a fluorine-containing polymer is produced by polymerizing at least a fluorine-containing monomer in the polymerization tank having a film formed on the metal inner surface (in more detail, the above-described predetermined region), it is possible to effectively prevent the fluorine-containing polymer from adhering to the polymerization tank even when the fluorine-containing monomer is polymerized by suspension polymerization in a reaction mixture containing a fluorine-containing solvent and water. There may be cases where the fluorine-containing polymer adheres to the polymerization tank after the reaction mixture is drained from the polymerization tank, but the adhesion strength is extremely small, and it is thus possible to easily remove the fluorine-containing polymer simply by applying a small external force thereto and to sufficiently remove the fluorine-containing polymer by jet cleaning. As a result, an effort necessary to remove the fluorine-containing polymer adhering to the polymerization tank may be reduced.

In contrast, in a case where such a film as in the present embodiment is not formed on the metal inner surface of the polymerization tank at the time of producing a fluorine-containing polymer by polymerizing at least a fluorine-containing monomer in the reaction mixture containing the fluorine-containing solvent and water by suspension polymerization, the fluorine-containing polymer strongly adheres to the polymerization tank. The fluorine-containing polymer strongly adhering to the polymerization tank as described above cannot be removed even by performing jet cleaning after the reaction mixture is drained from the polymerization tank.

The present embodiment is not restricted by any theories, and a reason therefor may be considered as described below. Metal surfaces normally may be hydrophobic. Fluorine-containing solvents (which may be liquid-phase substances or fluorine-containing monomers themselves) are also normally hydrophobic, have a high affinity to hydrophobic metal surfaces on which no films are formed and are likely to wet metal surfaces and spread on the metal surfaces. A fluorine-containing polymer may be generated by dissolving a fluorine-containing monomer (which may be a fluorine-containing solvent) and a polymerization initiator in such a fluorine-containing solvent and making a polymerization reaction proceed on a metal surface. Therefore, the polymerization of the fluorine-containing monomer is likely to occur on the metal surface, and/or the fluorine-containing monomer is likely to further polymerize into the fluorine-containing polymer adhering to the metal surface. As a result, the fluorine-containing polymer is considered to strongly adhere to the metal surface on which no films are formed. However, according to the present embodiment, a film (adhesion prevention film) is formed on the metal surface by the above-described treatment, whereby it is considered that the surface of this film becomes sufficiently hydrophilic, an opposite action to what has been described above works, and, furthermore, water in the reaction mixture is likely to be present and/or intrude between the meal surface and the fluorine-containing polymer, which makes it possible to effectively prevent adhesion of the fluorine-containing polymer.

The method for producing a fluorine-containing polymer of the present embodiment may further comprises, after the step (b),
(c) draining substantially all of the reaction mixture containing the fluorine-containing polymer from the polymerization tank, and then
repeating the step (a) and the step (b). This makes it possible to revive the fluorine-containing polymer adhesion prevention performance of the film preferably up to the original level even when the fluorine-containing polymer adhesion prevention performance deteriorates. Hereinafter, each step will be described in more detail.

### Step (c)

Substantially all of the reaction mixture containing the fluorine-containing polymer is drained from the polymerization tank and appropriately transferred to a subsequent step. At the time of draining the reaction mixture from the polymerization tank, the reaction mixture contains the fluorine-containing polymer and water and is preferably substantially free from the fluorine-containing solvent (and the unreacted fluorine-containing monomer and the unreacted fluorine-free monomer in the case of being used, which will be true below). This may be realized by decreasing the pressure in the polymerization tank to gasify the fluorine-containing solvent and purge the fluorine-containing solvent from the polymerization tank. This makes it possible to recover the fluorine-containing solvent and also makes it possible to shorten the drainage time of the reaction mixture from the polymerization tank.

A fluorine-containing mixture being "substantially free from" the fluorine-containing means that the concentration of the fluorine-containing solvent in the fluorine-containing mixture is 0.1 mass% or lower and preferably 0 mass%.

"Substantially all of" the reaction mixture being drained from the polymerization tank means that the reaction mixture is drained with the intention of emptying the inside of the polymerization tank and intends to allow the reaction mixture to inevitably remain in the polymerization tank.

### · Repetition of Step (a) and Step (b)

Unless otherwise described, the same operation as the above-described step (a) and step (b) can be performed.

In the case of performing the second or later round of the step (a), the contact time of the treatment agent may be shorter than the contact time of the first round as long as the equivalent adhesion prevention film as in the first round may be formed. In the case of the second or later round, the contact time may be, for example, 0.5 hours or longer and preferably 1.5 hours or longer. In addition, in the case of performing the second or later round of the step (a), the remainder of the treatment agent recovered in the previous round of the step (a) may be reused as part or all of the treatment agent in the next round of the step (a).

In the case of performing the second or later round of the step (b), the fluorine-containing solvent recovered in the step (c) may be reused as part or all of the fluorine-containing solvent of the reaction mixture in the step (b).

The timing of performing the step (c) and the second or later round of the step (a) and step (b) may be set as appropriate depending on the fluorine-containing polymer adhesion prevention performance of the film. For example, in a case where the suspension polymerization in the step (b) is performed in a continuous manner, the step (c) and the second or later round of the step (a) and step (b) may be performed based on the operation time of the suspension polymerization, the torque (and/or power) of a stirring blade or the like. In addition, for example, in a case where the suspension polymerization is performed in a batch manner or a semi-batch manner, the step (c) and the second or later round of the step (a) and step (b) may be performed (i) each time each batch ends or the step (c) and the second or later round of the step (a) and step (b) may be performed (ii) regularly or irregularly at appropriate arbitrary timings between batches. In the case of the (ii), the step (c) is normally performed each time each batch ends.

Hitherto, the method for producing a fluorine-containing polymer in one embodiment of the present disclosure has been described in detail, but the method for producing a fluorine-containing polymer of the present disclosure is not limited thereto, and appropriate arbitrary modification, substitution, addition or the like is possible.

### Examples

### (Example 1)

Example 1 relates to an example in which, after a first round of film formation was performed, PFA (in more detail, a tetrafluoroethylene/perfluoro(propyl vinyl ether) copolymer) was produced as a fluorine-containing polymer.

### · Step (a)

As a polymerization tank, a jacketed stirring-type SUS autoclave (including an SUS stirring blade and an SUS baffle) having an internal capacity of three liters and a metal surface (a treatment such as glass lining was not performed on the tank inner surface) was used. This polymerization tank was fully (no empty spaces) filled with a 5 mass% sodium pyrophosphate aqueous solution as a treatment agent under normal pressure, the treatment agent was maintained at 90°C for 13 hours while the stirring blade was rotated at 150 rpm, and then the remainder of the treatment agent (a portion excluding the treatment agent used for the formation of a film) was drained and recovered from the polymerization tank. After that, the inner surface of the polymerization tank was promptly cleaned sufficiently with pure water (until phosphoric acid ions were not detected).

Such a treatment made a film formed on the SUS inner surface of the polymerization tank (the inner wall surface of the polymerization tank and the surfaces of the stirring blade and the baffle). As a result of XPS measurement of the film, the P content was 5.5 atom%, and the Na content was 15 atom%.

The XPS measurement was performed on a 1 mm × 0.3 mm measurement region (depth: a maximum of 60 nm) using PHI 5000 VersaProbe II (manufactured by Ulvac-Phi, Inc.). A value measured by XPS at a depth of 0 nm was used as the content of each element (which will be true below).

### · Step (b)

Next, 0.75 liters of pure water was charged into the polymerization tank treated (to form the film) as described above. Stirring was begun, the internal space was sufficiently substituted with nitrogen, then, the inside of the tank was evacuated, 670 g of perfluorocyclobutane was charged thereinto, and the stirring blade was rotated at 450 rpm. Subsequently, 33 g of perfluoro(propyl vinyl ether) (hereinafter, PPVE) was injected thereinto, the temperature in the tank was set to a reaction temperature of 35°C, and tetrafluoroethylene (hereinafter, TFE) was injected thereinto up to 0.80 MPaG. 0.8 g of di-N-propyl peroxydicarbonate (hereinafter, NPP) as an initiator and 69 g of methanol as a molecular weight adjuster were injected thereinto, and polymerization (suspension polymerization) was begun. During a reaction, TFE was sequentially added so that the pressure in the system was held constant, and, at the same time, 0.8 g of PPVE was additionally injected thereinto in eight installments according to the amount of TFE added. After four hours, the reaction was ended when a total of 130 g of TFE and PPVE were charged thereinto, and the rotation of the stirring blade was stopped.

This made PFA (in more detail, a tetrafluoroethylene/perfluoro(propyl vinyl ether) copolymer) obtained as a fluorine-containing polymer in the reaction mixture. In Example 1, perfluorocyclobutane and PPVE functioned as fluorine-containing solvents, and TFE and PPVE were fluorine-containing monomers.

### · Step (c)

After the end of the reaction, the monomers were purged, and all of the reaction mixture (containing the fluorine-containing polymer and water and being substantially free from monomers (the reaction solvents/unreacted monomers)) remaining in the polymerization tank was drained from the polymerization tank. The fluorine-containing polymer was separated from the reaction mixture thus obtained and cleaned and dried, thereby obtaining 125 g of a white powder.

An element derived from sodium pyrophosphate may be incorporated into the reaction mixture drained from the polymerization tank but may be removed by cleaning the fluorine-containing polymer.

As a result of visually confirming the inner surface of the polymerization tank after the step (c), adhesion of the fluorine-containing polymer to the inner surface of the polymerization tank (the inner wall surface of the polymerization tank and the surfaces of the stirring blade and the baffle) was scarcely observed. The fluorine-containing polymer slightly adhered to a part (a region with which the reaction mixture came into contact) of the inner wall surface but could be completely removed by jet cleaning (0.3 MPaG) using pure water.

### (Example 2)

Example 2 relates to an example in which, after a first round of film formation was performed, FEP (in more detail, a tetrafluoroethylene/hexafluoropropylene copolymer) was produced as a fluorine-containing polymer.

### · Step (a)

A polymerization tank was treated with a treatment agent in the same manner as in the step (a) of Example 1. That is, the sodium pyrophosphate concentration of the treatment agent was set to 5 mass%, and the contact conditions were set to 90°C and 13 hours.

Such a treatment made a film formed on the SUS inner surface of the polymerization tank (the inner wall surface of the polymerization tank and the surfaces of the stirring blade and the baffle). As a result of XPS measurement of the obtained film, the P content was 5.5 atom%, and the Na content was 15 atom%.

### · Step (b)

Next, 0.72 liters of pure water was charged into the polymerization tank treated (to form the film) as described above. Stirring was begun, the internal space was sufficiently substituted with nitrogen, then, the inside of the tank was evacuated, 720 g of hexafluoropropylene (hereinafter, HFP) was charged thereinto, and the stirring blade was rotated at 450 rpm. The temperature in the tank was set to a reaction temperature of 29°C, and TFE was injected thereinto up to 0.93 MPaG. 9.0 g of di (ω-hydrododecafluoroheptanoyl) peroxide (hereinafter, DHP) as an initiator and 2.2 g of methanol as a molecular weight adjuster were injected thereinto, and polymerization (suspension polymerization) was begun. During a reaction, TFE was sequentially added so that the pressure in the system was held constant. After four hours, the reaction was ended when a total of 124 g of TFE was charged thereinto, and the rotation of the stirring blade was stopped.

This made FEP (in more detail, a tetrafluoroethylene/hexafluoropropylene copolymer) obtained as a fluorine-containing polymer in the reaction mixture. In Example 2, HFP functioned as a fluorine-containing solvent, and TFE and HFP were fluorine-containing monomers.

### · Step (c)

90 g of a white powder was obtained in the same manner as in the step (a) of Example 1.

As a result of visually confirming the inner surface of the polymerization tank after the step (c), adhesion of the fluorine-containing polymer to the inner surface of the polymerization tank (the inner wall surface of the polymerization tank and the surfaces of the stirring blade and the baffle) was scarcely observed. The fluorine-containing polymer slightly adhered to a part (a region with which the reaction mixture came into contact) of the inner wall surface but could be completely removed by jet cleaning (0.3 MPaG) using pure water.

### (Example 3)

Example 3 relates to an example in which, after a second round of film formation was performed using the polymerization tank after Example 1, PFA (in more detail, a tetrafluoroethylene/perfluoro(propyl vinyl ether) copolymer) was produced as a fluorine-containing polymer.

In Example 3, the steps (a) to (c) of Example 1 were performed in the same manner except that, in the step (a), the polymerization tank after the steps (a) to (c) were performed in Example 1 was used, the sodium pyrophosphate concentration of a treatment agent was set to 5 mass%, and the contact conditions were set to 90°C and 1.5 hours.

A treatment in the step (a) of Example 3 made a film formed on the SUS inner surface of the polymerization tank (the inner wall surface of the polymerization tank and the surfaces of the stirring blade and the baffle). As a result of XPS measurement of the obtained film, the P content was 5.5 atom%, and the Na content was 15 atom%.

125 g of a white powder was obtained in the step (c) of Example 3.

As a result of visually confirming the inner surface of the polymerization tank after the step (c) of Example 3, adhesion of the fluorine-containing polymer to the inner surface of the polymerization tank (the inner wall surface of the polymerization tank and the surfaces of the stirring blade and the baffle) was scarcely observed. The fluorine-containing polymer slightly adhered to a part (a region with which the reaction mixture came into contact) of the inner wall surface but could be completely removed by jet cleaning (0.3 MPaG) using pure water.

### (Example 4)

Example 4 relates to an example in which, after a third round of film formation was performed using the polymerization tank after Example 3, PFA (in more detail, a tetrafluoroethylene/perfluoro(propyl vinyl ether) copolymer) was produced as a fluorine-containing polymer.

In Example 4, the steps (a) to (c) of Example 1 were performed in the same manner except that, in the step (a), the polymerization tank after the steps (a) to (c) were performed in Example 3 was used, the sodium pyrophosphate concentration of a treatment agent was set to 3 mass%, and the contact conditions were set to 90°C and 13 hours.

As a result of XPS measurement of the film obtained by a treatment in the step (a) of Example 4, the P content was 5.5 atom%, and the Na content was 15 atom%.

As a result of visually confirming the inner surface of the polymerization tank after the step (c) of Example 4, adhesion of the fluorine-containing polymer to the inner surface of the polymerization tank (the inner wall surface of the polymerization tank and the surfaces of the stirring blade and the baffle) was scarcely observed. The fluorine-containing polymer slightly adhered to a part (a region with which the reaction mixture came into contact) of the inner wall surface but could be completely removed by jet cleaning (0.3 MPaG) using pure water.

### (Example 5)

Example 5 relates to an example in which, after a fourth round of film formation was performed using the polymerization tank after Example 4, PFA (in more detail, a tetrafluoroethylene/perfluoro(propyl vinyl ether) copolymer) was produced as a fluorine-containing polymer.

In Example 5, the steps (a) to (c) of Example 1 were performed in the same manner except that, in the step (a), the polymerization tank after the steps (a) to (c) were performed in Example 4 was used, the sodium pyrophosphate concentration of a treatment agent was set to 3 mass%, and the contact conditions were set to 90°C and 1.5 hours.

As a result of XPS measurement of the film obtained by a treatment in the step (a) of Example 5, the P content was 5.5 atom%, and the Na content was 15 atom%.

As a result of visually confirming the inner surface of the polymerization tank after the step (c) of Example 5, adhesion of the fluorine-containing polymer to the inner surface of the polymerization tank (the inner wall surface of the polymerization tank and the surfaces of the stirring blade and the baffle) was scarcely observed. The fluorine-containing polymer slightly adhered to a part (a region with which the reaction mixture came into contact) of the inner wall surface but could be completely removed by jet cleaning (0.3 MPaG) using pure water.

### (Example 6)

Example 6 relates to an example in which, after a fifth round of film formation was performed using the polymerization tank after Example 5, PFA (in more detail, a tetrafluoroethylene/perfluoro(propyl vinyl ether) copolymer) was produced as a fluorine-containing polymer.

In Example 6, the steps (a) to (c) of Example 1 were performed in the same manner except that, in the step (a), the polymerization tank after the steps (a) to (c) were performed in Example 5 was used, the sodium pyrophosphate concentration of a treatment agent was set to 1 mass%, and the contact conditions were set to 90°C and eight hours.

As a result of XPS measurement of the film obtained by a treatment in the step (a) of Example 6, the P content was 5.5 atom%, and the Na content was 15 atom%.

As a result of visually confirming the inner surface of the polymerization tank after the step (c) of Example 6, adhesion of the fluorine-containing polymer to the inner surface of the polymerization tank (the inner wall surface of the polymerization tank and the surfaces of the stirring blade and the baffle) was scarcely observed. The fluorine-containing polymer slightly adhered to a part (a region with which the reaction mixture came into contact) of the inner wall surface but could be completely removed by jet cleaning (0.3 MPaG) using pure water.

### (Example 7)

Example 7 relates to another example in which, after a first round of film formation was performed, FEP (in more detail, a tetrafluoroethylene/hexafluoropropylene copolymer) was produced as a fluorine-containing polymer.

In Example 7, the steps (a) to (c) of Example 2 were performed in the same manner except that, in the step (a), the sodium pyrophosphate concentration of a treatment agent was set to 5 mass%, the contact conditions were set to 90°C and three hours, and, in the step (b), 2.6 g of a sodium pyrophosphate powder was charged at the same time of the charging of pure water.

As a result of XPS measurement of the film obtained by a treatment in the step (a) of Example 7, the P content was 5 atom%, and the Na content was 2 atom%.

As a result of visually confirming the inner surface of the polymerization tank after the step (c) of Example 7, adhesion of the fluorine-containing polymer was observed in many portions of the wall of the polymerization tank. Adhesion to the stirring blade and the baffle was scarcely observed. Half or more of the fluorine-containing polymer adhering to the wall of the polarization tank could be removed by jet cleaning (0.3 MPaG) using pure water, but a part remained. All of the remaining polymer adhering to the wall could be easily removed by a light touch with a sponge, and it was confirmed that the adhesion force significantly reduced compared with a case where a sodium pyrophosphate treatment was not performed.

### (Example 8)

Example 8 relates to an example in which the scale of Example 1 was increased.

The steps (a) to (c) of Example 1 were performed in the same manner except that, in the step (a), a stainless steel autoclave equipped with a stirrer having a capacity of 139 L was used as a polymerization tank and the amounts of a treatment agent used in the step (a) and raw materials used in the step (b) were increased according to the increased proportion of the capacity of the polymerization tank.

In Example 8 as well, the same results as in Example 1 were obtained regarding the contents of P and Na in a film and the adhesiveness of a fluorine-containing polymer.

### (Example 9)

Example 9 relates to an example in which the scale of Example 2 was increased.

The steps (a) to (c) of Example 2 were performed in the same manner except that, in the step (a), a stainless steel autoclave equipped with a stirrer having a capacity of 139 L was used as a polymerization tank and the amounts of a treatment agent used in the step (a) and raw materials used in the step (b) were increased according to the increased proportion of the capacity of the polymerization tank.

In Example 9 as well, the same results as in Example 2 were obtained regarding the contents of P and Na in a film and the adhesiveness of a fluorine-containing polymer.

### (Comparative Example 1)

Comparative Example 1 relates to an example in which an example (production of PTFE without using a fluorine-containing solvent) of Patent Literature 2 was verified.

As a polymerization tank, the same jacketed stirring-type SUS autoclave having an internal capacity of three liters as that used in Example 1 was used. This polymerization tank was fully (no empty spaces) filled with 64 mass ppm of a sodium pyrophosphate aqueous solution as a treatment agent under normal pressure, the treatment agent was maintained at 90°C for one hour while a stirring blade was rotated at 150 rpm, and then the remainder of the treatment agent was drained and recovered from the polymerization tank. After that, the inner surface of the polymerization tank was promptly cleaned sufficiently with pure water.

As a result of XPS measurement of the film obtained by the above-described treatment, the P content was 2 atom%, and the Na content was 1 atom%.

1.5 liters of pure water was charged into the polymerization tank treated (to form the film) as described above. Stirring was begun, the internal space was sufficiently substituted with nitrogen, and the stirring blade was then rotated at 480 rpm. The temperature in the tank was set to a reaction temperature of 12°C, and TFE was injected thereinto up to 0.6 MPaG. 12 g of potassium persulfate, 75 g of sodium sulfite and 22.5 g of silver nitrate were injected thereinto as initiators, and polymerization was begun. TFE was sequentially added so that the pressure in the system was held constant. After five hours, the reaction was ended when a total of 150 g of TFE was charged thereinto, and the rotation of the stirring blade was stopped.

As a result of visually confirming the inner surface of the polymerization tank, adhesion (fixation) of a fluorine-containing polymer to the inner surface of the polymerization tank (the inner wall surface of the polymerization tank and the surfaces of the stirring blade and the baffle) was observed. Jet cleaning (0.3 MPaG) using pure water was performed on the fluorine-containing polymer adhering to a part (a region with which the reaction mixture came into contact) of the inner wall surface, and the proportion of the fluorine-containing polymer adhering (fixing) to the inner wall surface was investigated and found out to be 0.1 mass%.

### (Comparative Example 2)

PFA was produced in the same manner as in the steps (b) and (c) of Example 1 except that a polymerization tank treated (to form a film) under the same conditions as in Comparative Example 1 was used.

As a result of confirming the inner surface of the polymerization tank, adhesion of a fluorine-containing polymer was observed on the inner wall surface of the polymerization tank and almost all of the surfaces of a stirring blade and a baffle, and, even after jet cleaning (0.3 MPaG) was performed using pure water, the fluorine-containing polymer fixed in a thin film shape remained fixed to all of the surfaces.

### (Comparative Example 3)

FEP was produced in the same manner as in the steps (b) and (c) of Example 2 except that a polymerization tank treated (to form a film) under the same conditions as in Comparative Example 1 was used.

As a result of confirming the inner surface of the polymerization tank, adhesion of a fluorine-containing polymer was observed on the inner wall surface of the polymerization tank and almost all of the surfaces of a stirring blade and a baffle, and, even after jet cleaning (0.3 MPaG) was performed using pure water, the fluorine-containing polymer fixed in a thin film shape remained fixed to all of the surfaces.

### Industrial Applicability

The method for producing a fluorine-containing polymer of the present disclosure may be preferably used to produce a fluorine-containing polymer as a material for a variety of forming processes.

## Claims

1. A method for producing a fluorine-containing polymer comprising:
(a) treating, on an inner surface made of metal of a polymerization tank, at least a region with which a reaction mixture may come into contact during the following step (b) with a treatment agent containing phosphoric acid and/or a phosphate and a polar solvent to form an adhesion prevention film on the region, and
(b) polymerizing at least a fluorine-containing monomer in a reaction mixture containing a fluorine-containing solvent and water by suspension polymerization in the polymerization tank to obtain the fluorine-containing polymer,
wherein in step (a) the temperature during the contact between the region and the treatment agent is ≤ 100°C, and the adhesion prevention film contains 3-10 atom% P, determined by the method defined in the description.

2. The method of claim 1, wherein the concentration of the phosphoric acid and/or phosphate in the treatment agent is 0.1-15 mass%.

3. The method of claim 1 or 2, wherein the treatment agent is an aqueous solution of a metal pyrophosphate.

4. The method of claim 3, wherein the treatment agent is an aqueous solution of sodium pyrophosphate.

5. The method of claim 4, wherein the adhesion prevention film contains 1-20 atom% **Na,** determined by the method defined in the description.

6. The method of any of claims 1-5, wherein the metal that forms the inner surface of the polymerization tank is at least one selected from of stainless steel, nickel alloy steel and carbon steel.

7. The method of any of claims 1-6, further comprising, after step (b):
(c) draining substantially all of the reaction mixture containing the fluorine-containing polymer from the polymerization tank, and then repeating (a) and (b).

8. The method of claim 7, wherein, in step (c), the reaction mixture contains the fluorine-containing polymer and the water, and the concentration of the fluorine-containing solvent is ≤ 0.1. mass%.

## Patentansprüche

1. Verfahren zur Herstellung eines fluorhaltigen Polymers, umfassend:
(a) Behandeln mindestens eines Bereichs, mit dem ein Reaktionsgemisch während des folgenden Schritts (b) in Kontakt kommen kann, auf einer aus Metall bestehenden Innenfläche eines Polymerisationstanks, mit einem Behandlungsmittel, das Phosphorsäure und/oder ein Phosphat und ein polares Lösungsmittel enthält, um einen Haftverhinderungsfilm auf dem Bereich zu bilden, und
(b) Polymerisieren mindestens eines fluorhaltigen Monomers in einem Reaktionsgemisch, das ein fluorhaltiges Lösungsmittel und Wasser enthält, durch Suspensionspolymerisation in dem Polymerisationstank, um das fluorhaltige Polymer zu erhalten,
wobei in Schritt (a) die Temperatur während des Kontakts zwischen dem Bereich und dem Behandlungsmittel ≤ 100 °C beträgt, und der Haftverhinderungsfilm 3 bis 10 Atom-% P enthält, bestimmt nach dem in der Beschreibung definierten Verfahren.

2. Verfahren gemäß Anspruch 1, wobei die Konzentration der Phosphorsäure und/oder des Phosphats in dem Behandlungsmittel 0,1 bis 15 Massenprozent beträgt.

3. Verfahren gemäß Anspruch 1 oder 2, wobei das Behandlungsmittel eine wässrige Lösung eines Metallpyrophosphats ist.

4. Verfahren gemäß Anspruch 3, wobei das Behandlungsmittel eine wässrige Lösung von Natriumpyrophosphat ist.

5. Verfahren gemäß Anspruch 4, wobei der Haftverhinderungsfilm 1 bis 20 Atom-% Na enthält, bestimmt nach dem in der Beschreibung definierten Verfahren.

6. Verfahren gemäß mindestens einem der Ansprüche 1 bis 5, wobei das Metall, das die Innenfläche des Polymerisationstanks bildet, mindestens eines ist, ausgewählt aus Edelstahl, Nickellegierungsstahl und Kohlenstoffstahl.

7. Verfahren gemäß mindestens einem der Ansprüche 1 bis 6, das nach Schritt (b) ferner umfasst:
(c) Ablassen im Wesentlichen des gesamten Reaktionsgemisches, das das fluorhaltige Polymer enthält, aus dem Polymerisationstank und anschließendes Wiederholen von (a) und (b).

8. Verfahren gemäß Anspruch 7, wobei in Schritt (c) das Reaktionsgemisch das fluorhaltige Polymer und das Wasser enthält und die Konzentration des fluorhaltigen Lösungsmittels ≤ 0,1 Massenprozent beträgt.

## Revendications

1. Procédé de production d'un polymère contenant du fluor, comprenant :
(a) le fait de traiter, sur une surface intérieure en métal d'une cuve de polymérisation, au moins une région avec laquelle un mélange réactionnel peut venir en contact pendant l'étape suivante (b) avec un agent de traitement contenant de l'acide phosphorique et/ou un phosphate et un solvant polaire pour former un film de prévention de l'adhérence sur la région, et
(b) le fait de polymériser au moins un monomère contenant du fluor dans un mélange réactionnel contenant un solvant contenant du fluor et de l'eau par polymérisation en suspension dans la cuve de polymérisation, pour obtenir le polymère contenant du fluor,
dans lequel, à l'étape (a), la température pendant le contact entre la région et l'agent de traitement est ≤ 100 °C, et le film de prévention de l'adhérence contient de 3 à 10 % atomique de P, déterminé par la méthode définie dans la description.

2. Procédé selon la revendication 1, dans lequel la concentration de l'acide phosphorique et/ou du phosphate dans l'agent de traitement est de 0,1 à 15 % en masse.

3. Procédé selon la revendication 1 ou la revendication 2, dans lequel l'agent de traitement est une solution aqueuse d'un pyrophosphate métallique.

4. Procédé selon la revendication 3, dans lequel l'agent de traitement est une solution aqueuse de pyrophosphate de sodium.

5. Procédé selon la revendication 4, dans lequel le film de prévention de l'adhérence contient de 1 à 20 % atomique de Na, déterminé par la méthode définie dans la description.

6. Procédé selon l'une quelconque des revendications 1 à 5, dans lequel le métal qui forme la surface intérieure de la cuve de polymérisation est au moins un, choisi, faisant partie du groupe constitué par l'acier inoxydable, un acier d'alliage de nickel et un acier au carbone.

7. Procédé selon l'une quelconque des revendications 1 à 6, comprenant en outre, après l'étape (b) :
(c) le fait de vidanger la cuve de polymérisation de sensiblement la totalité du mélange réactionnel contenant le polymère contenant du fluor, et, ensuite, de répéter (a) et (b).

8. Procédé selon la revendication 7, dans lequel, à l'étape (c), le mélange réactionnel contient le polymère contenant du fluor et de l'eau, et la concentration du solvant contenant du fluor est ≤ 0,1 % en masse.
